# FASCICULE DE BREVET EUROPEEN

(11) **EP 1 916 134 B1**
(45) Date de publication et mention de la délivrance du brevet: **15.06.2011**
(21) Numéro de dépôt: 07119393.2
(22) Date de dépôt: 26.10.2007
(51) Int. Cl.: B60J 5/10

(54) **Ouvrant arrière de véhicule automobile**
Kraftfahrzeug-Heckklappe
Motor vehicle tailgate

(30) Priorité: 27.10.2006 FR 0654616
(43) Date de publication de la demande: 30.04.2008
(73) Titulaire: COMPAGNIE PLASTIC OMNIUM, 69007 Lyon (FR)
(72) Inventeur: Andre, Gérald, 01500 Amberieu en Bugey (FR); Rocheblave, Laurent, 69100 Villeurbanne (FR); Ginja, Stéphane, 01500 Amberieu en Bugey (FR)
(74) Mandataire: Remy, Vincent Noel Paul

(56) Documents cités:
- EP-A2- 1 036 715
- FR-A1- 2 750 365
- US-A- 4 357 040
- US-A- 4 721 333

## Description

### Domaine technique.

La présente invention concerne un ouvrant arrière de véhicule automobile.

### Etat de la technique.

En matière de chocs, les constructeurs automobiles s'imposent un cahier des charges qui envisage trois catégories d'impacts, à savoir :
- les chocs à haute vitesse, qui correspondent à un impact frontal ou arrière du véhicule contre un obstacle rigide ou déformable à une vitesse de 56 à 64 km/h, traités avec un objectif de protection des occupants du véhicule,
- les chocs « assurance » à environ 15 km/h contre un mur fixe, tels que celui connu sous le nom de Danner, ou encore « AZT », ou à environ 8 km/h contre un poteau (choc poteau, norme IIHS) traités avec un objectif de protection du châssis du véhicule, et
- les petits chocs, ou chocs « parking » à une vitesse inférieure à 5 km/h, traités avec un objectif de protection des pièces de carrosserie du véhicule.

Dans la présente demande, on appellera « châssis arrière » du véhicule une structure rigide, comportant :
- une cellule de survie, indéformable plastiquement en cas de choc à haute vitesse, de sorte que cette cellule de survie soit apte à protéger les passagers du véhicule automobile en cas d'un tel choc,
- deux longerons principaux arrière, destinés à se déformer plastiquement en cas de choc haute vitesse, et
- éventuellement toute autre pièce de structure ayant une rigidité du même ordre de grandeur que la rigidité des longerons, telle, par exemple, qu'une traverse arrière rigide agencée à l'extrémité des deux longerons arrière. On entend par "traverse rigide" une structure rigide s'étendant entre deux points par lesquels elle est fixée.

On peut également désigner le châssis arrière par « structure inférieure arrière », ou « caisse en blanc inférieure arrière », du véhicule.

On appellera par ailleurs « système arrière d'absorption de chocs assurance» du véhicule un ensemble de moyens d'absorption de chocs arrière, aptes à absorber des chocs du type « assurance » afin d'empêcher la déformation plastique du châssis arrière. Ce système d'absorption est destiné à se déformer plastiquement en cas de chocs assurance. On notera que l'on considère qu'un système est apte à absorber des chocs du type « assurance » lorsqu'il est capable d'assurer, en se déformant, au moins 60% de l'absorption d'énergie en cas de choc assurance.

On notera en outre que l'absorption de l'énergie d'un choc, se produisant indifféremment au droit d'un longeron ou entre les longerons, peut généralement être assurée de deux manières différentes, à savoir par compression, lorsque le moyen d'absorption est en appui contre une surface rigide, ou par flexion d'un élément du moyen d'absorption, lorsque cet élément flexible est en appui sur au moins deux points d'appui rigides espacés entre eux. Dans le cas de la flexion, l'élément destiné à se déformer par flexion en cas de choc n'absorbe qu'une partie minoritaire, généralement environ 20%, de l'énergie du choc, le moyen d'absorption comportant en outre des absorbeurs locaux, agencés au droit des longerons, destinés à absorber une partie majoritaire, généralement environ 80%, de l'énergie du choc, en se déformant par compression.

Dans tous les cas, les moyens d'absorption sont capables de consommer de l'énergie en se déformant, de façon à réduire la quantité d'énergie résiduelle transmise au châssis lors d'un choc.

On connaît déjà dans l'état de la technique, notamment d'après US 4 357 040, un ouvrant arrière conforme au préambule de la revendication 1.

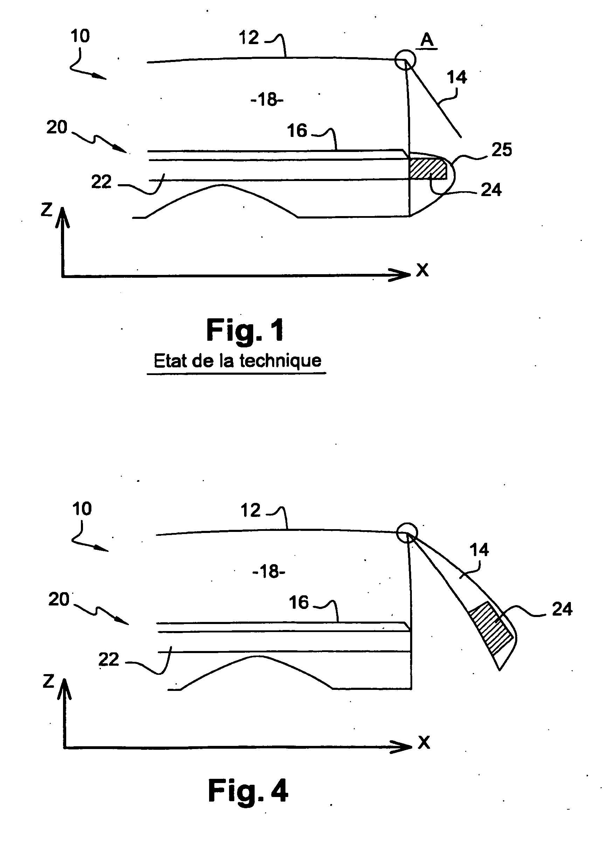

Sur un véhicule automobile classique, les moyens d'absorption sont ménagés sur des longerons du châssis arrière, comme cela est représenté sur la figure 1, représentant schématiquement une partie arrière d'un véhicule automobile 10, du type comprenant un toit 12 et un ouvrant 14, appelé hayon, manoeuvrable autour d'un axe de pivotement A sensiblement horizontal situé au voisinage du toit 12.

Le véhicule automobile 10 comporte également un plancher 16 délimitant, avec le toit 12, un coffre 18 du véhicule automobile 10.

Le véhicule est muni d'un châssis arrière 20 comprenant deux longerons principaux arrière 22, sur lesquels est agencé un système d'absorption 24, tel qu'un élément transversal, ou poutre d'absorption de chocs, en appui sur chaque longeron et travaillant principalement en flexion au cours d'un choc assurance, et généralement associé à des absorbeurs locaux agencés au droit des longerons, entre ces longerons et l'élément transversal. Le véhicule comprend en outre une peau de pare-chocs 25, agencée à hauteur des longerons 22, en regard du système d'absorption 24.

Comme cela est visible sur la figure 1, la présence du système d'absorption agencé à l'extrémité des longerons, à l'intérieur du pare-chocs, impose un porte-à-faux élevé selon la direction longitudinale du véhicule automobile X, gênant l'accès au coffre 18, notamment au fond de ce coffre, lorsque le hayon 14 est ouvert.

Un problème analogue d'accessibilité au coffre se pose dans le cas d'un véhicule automobile muni d'un ouvrant 14, dit ridelle, manoeuvrable autour d'un axe de pivotement sensiblement horizontal situé au voisinage du plancher 16 du véhicule automobile 10. Un tel véhicule est par exemple décrit dans DE 103 27 014. Les figures 2 et 3 représentent schématiquement respectivement l'arrière d'un tel véhicule automobile classique, respectivement lorsque la ridelle 14 est fermée et ouverte.

Le véhicule automobile 10 comprend un système d'absorption 24 comprenant une poutre d'absorption de chocs ainsi que des absorbeurs locaux agencés au droit des longerons 22, entre ces longerons 22 et la poutre d'absorption. Le véhicule comprend en outre une peau de pare-chocs 25, agencée à hauteur des longerons 22, en regard du système d'absorption 24. Cette peau de pare-chocs 25 a une fonction décorative et ne participe pas de façon significative à l'absorption d'un choc.

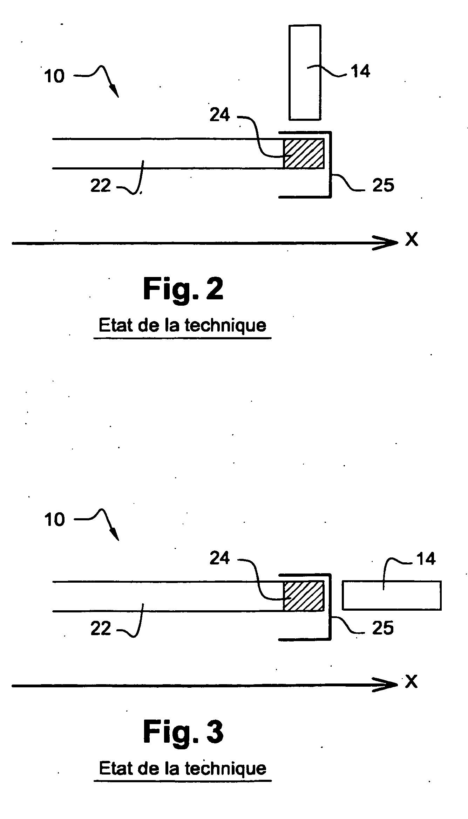

Une telle peau de pare-chocs 25 étant relativement encombrante, la ridelle 14 doit la surpasser lors de son ouverture, comme cela est visible sur la figure 2, ce qui impose ainsi un porte à faux élevé selon la direction longitudinale X, gênant l'accès au coffre du véhicule automobile, notamment au fond de ce coffre lorsque la ridelle 14 est ouverte.

L'invention a pour but de réduire le porte-à-faux du véhicule selon sa direction longitudinale X, facilitant ainsi l'accès au coffre, notamment au fond de ce coffre, et cela sans réduire l'efficacité du système d'absorption, qui est nécessaire pour protéger le châssis en cas de choc du type choc-assurance.

### Solution technique proposée par l'invention.

L'invention a pour objet un ouvrant arrière selon la revendication 1.

### Avantages apportés par l'invention.

Grâce à l'invention, le système d'absorption n'est plus porté par le châssis arrière, ce qui permet de réduire le porte-à-faux selon la direction longitudinale du véhicule lorsque l'ouvrant est ouvert. Cette réduction du porte-à-faux correspond globalement à la largeur du système d'absorption, ajoutée à l'espace occupé par la peau de pare-chocs, dans la direction longitudinale.

En outre, dans le cas où le châssis arrière ne comporte pas de traverse rigide entre les deux longerons, l'invention est particulièrement intéressante car elle permet d'agrandir la hauteur de l'extrémité arrière du coffre, grâce à l'abaissement de la hauteur de chargement.

En effet, dans l'état de la technique, du fait de la présence d'un système d'absorption généralement transversal agencé à l'extrémité des longerons, l'extrémité arrière du coffre qui est située entre les deux longerons est encombrée par ce système d'absorption. Ainsi, la hauteur de cette extrémité ne peut pas être inférieure à celle des longerons. Cette disposition s'avère donc gênante pour charger des objets lourds et encombrants dans le véhicule.

Grâce à l'invention, le système d'absorption n'encombre plus l'extrémité arrière du coffre puisqu'il est porté par l'ouvrant, si bien que l'espace situé entre les deux longerons est dégagé. L'extrémité arrière du coffre, située entre les deux longerons, peut alors être plus basse, ce qui facilite l'accessibilité au coffre.

En outre, comme le système d'absorption est porté par l'ouvrant, la peau de l'ouvrant peut remplir la fonction esthétique habituellement remplie par une peau de pare-chocs. Contrairement à une peau de pare-chocs classique, cette peau de l'ouvrant ne risque pas de supporter des objets lourds en cours de chargement dans le coffre lorsque cet ouvrant est ouvert. En effet, une peau de pare-chocs d'un véhicule classique étant relativement fragile (sujette à des coups ou à des rayures), il est préférable qu'elle ne supporte pas des objets lourds en cours de chargement dans le coffre, ces derniers étant susceptibles de faire porter leur poids sur la peau et ainsi de générer des déformations.

L'ouvrant arrière étant destiné à équiper un véhicule automobile dont le châssis arrière comporte deux longerons arrière, le système d'absorption comporte un élément transversal s'étendant transversalement sur une distance supérieure ou égale à la distance séparant les deux longerons. Ainsi, en cas de choc, tout effort reçu sur une partie de cet élément transversal peut être transmis au châssis du véhicule, quelle que soit la partie de l'élément transversal subissant le choc.

L'ouvrant arrière étant destiné à équiper un véhicule automobile dont le châssis arrière comporte deux longerons arrière, le système d'absorption comporte deux éléments latéraux d'absorption, chacun étant localisé au droit de l'un des longerons, entre l'élément transversal et l'un des longerons, l'élément transversal étant conformé pour se déformer par flexion entre les deux longerons arrière du véhicule lors d'un choc assurance. Dans ce cas, l'élément transversal n'absorbe qu'une partie minoritaire, généralement environ 20%, de l'énergie du choc, et les éléments latéraux d'absorption absorbent une partie majoritaire, généralement environ 80%, de l'énergie du choc, en se déformant par compression. Ainsi, dans le cas où le châssis arrière ne comporte pas de traverse rigide, l'espace situé entre les deux longerons est dégagé pour permettre à l'élément transversal de se déformer par flexion, et ainsi absorber l'énergie d'un choc assurance. Il est particulièrement avantageux que, dans ce cas, l'élément transversal soit galbé vers l'extérieur du véhicule, afin de se déformer davantage en se dé-galbant, et ainsi absorber l'énergie d'un choc plus efficacement. Pour favoriser la transmission des efforts, les éléments latéraux sont munis de doigts de centrages destinés à coopérer avec des orifices complémentaires ménagés dans les longerons afin d'empêcher des rotations de l'élément transversal lorsque celui-ci se déforme par flexion.

### Modes de réalisation particuliers avantageux

L'invention peut en outre comporter l'une ou plusieurs des caractéristiques suivantes.
- L'ouvrant arrière étant destiné à équiper un véhicule automobile dont le châssis arrière comporte des longerons, le système d'absorption est agencé sur l'ouvrant de façon à être localisé à la hauteur d'au moins une partie des longerons lorsque le véhicule automobile est équipé de l'ouvrant, et lorsque cet ouvrant est fermé, de sorte que le système d'absorption transmette des efforts aux longerons en cas de choc sur ce système d'absorption. Ainsi, on crée une voie d'effort entre le système d'absorption et les longerons, permettant de transmettre l'énergie résiduelle d'un choc, notamment d'un choc à haute vitesse, aux longerons du véhicule.
- L'ouvrant arrière étant destiné à équiper un véhicule automobile dont le châssis arrière comporte une traverse rigide transversale, l'élément transversal est conformé pour se déformer par compression contre la traverse rigide du châssis arrière du véhicule lors d'un choc assurance. Ainsi, c'est par écrasement de l'élément transversal contre la traverse rigide que l'élément transversal absorbe l'énergie du choc assurance.
- L'ouvrant arrière comprend une peau extérieure et une peau intérieure, délimitant ensemble un logement pour au moins une partie du système d'absorption. Ainsi, on profite de l'espace délimité par les deux peaux pour agencer tout ou partie du système d'absorption, si bien que ce dernier n'est pas visible depuis l'extérieur du véhicule, et n'impose donc pas de contraintes esthétiques. On notera qu'on entend par peau extérieure une peau dont une grande partie de la surface est visible depuis l'extérieur du véhicule lorsque l'ouvrant est fermé, et qui peut également comporter des éléments rapportés recouvrant partiellement cette surface extérieure, tels qu'un bandeau décoratif ou de protection de la peau contre des chocs parking.
- L'ouvrant arrière comprend une peau extérieure et une peau intérieure, le système d'absorption étant logé dans une pièce de carrosserie formant caisson rapportée sur la peau extérieure, du côté opposé à la peau intérieure. Dans ce cas, il est possible, en cas de choc assurance où seuls le système d'absorption et le caisson ont été déformés, de n'avoir à remplacer que ces derniers, et non les autres éléments de l'ouvrant. De façon avantageuse, la peau extérieure forme un renfoncement dans lequel le caisson est logé, ce caisson et cette peau extérieure ayant ainsi des formes complémentaires, de sorte que l'on ne rajoute pas une forme faisant saillie de l'ensemble de la peau extérieure.
- L'ouvrant arrière est manoeuvrable autour d'un axe de pivotement sensiblement horizontal situé au voisinage du toit du véhicule automobile, lorsque le véhicule automobile est équipé de l'ouvrant. L'ouvrant est par exemple un hayon. Ce mode de réalisation est particulièrement intéressant pour réduire la longueur de l'arrière du véhicule dans la direction longitudinale lorsque l'ouvrant est ouvert.
- L'ouvrant arrière est manoeuvrable autour d'un axe de pivotement sensiblement horizontal situé au voisinage du plancher du véhicule automobile, lorsque le véhicule automobile est équipé de l'ouvrant. L'ouvrant est par exemple une ridelle. Ce mode de réalisation est avantageux pour accéder plus facilement au fond du coffre dans le cas d'un véhicule à ridelle. En effet, comme l'ouvrant porte le système d'absorption, il peut également intégrer la peau de pare-chocs arrière. Ainsi, une fois l'ouvrant en position ouverte, la peau de pare-chocs, qui peut être constituée par la peau de la ridelle, est tournée vers le sol, et n'est donc plus intercalée entre le bas du coffre et l'ouvrant dans la direction longitudinale du véhicule. Il en résulte que le fond du coffre est plus accessible que dans l'état de la technique.

L'invention concerne également un véhicule automobile, comprenant un châssis arrière, **caractérisé en ce qu**'il comporte un ouvrant arrière tel que défini précédemment.

### Brève description des figures.

L'invention sera mieux comprise à la lecture de la description qui va suivre, donnée uniquement à titre d'exemple et faite en se référant aux dessins dans lesquels :
- la figure 1, commentée précédemment, représente schématiquement une partie arrière d'un véhicule automobile classique du type comprenant un hayon ;
- les figures 2 et 3, commentées précédemment, représentent schématiquement une partie arrière d'un véhicule automobile classique du type comprenant une ridelle, respectivement lorsque la ridelle est en position fermée et ouverte ;
- la figure 4 est une vue analogue à la figure 1 d'une partie arrière d'un véhicule automobile selon un premier mode de réalisation de l'invention ;
- la figure 5 est une vue en perspective de la partie arrière du véhicule automobile de la figure 4 ;
- la figure 6 est une vue du dessus de la partie arrière de véhicule automobile de la figure 5 ;
- la figure 7 est une vue analogue à la figure 5 d'une partie arrière d'un véhicule automobile selon une première variante de réalisation du premier mode de réalisation de l'invention ;
- la figure 8 est une vue analogue à la figure 5 d'une partie arrière d'un véhicule automobile selon une deuxième variante de réalisation du premier mode de réalisation de l'invention ;
- la figure 9 est un détail de la partie arrière de véhicule automobile de la figure 4 ;
- la figure 10 est une vue similaire à la figure 9 d'une partie arrière de véhicule automobile selon une autre variante de réalisation ;
- la figure 11 est une vue similaire à la figure 4 d'une partie arrière d'un véhicule automobile selon un deuxième mode de réalisation de l'invention ;
- Les figures 12 et 13 sont des vues analogues aux figures 2 et 3 de la partie arrière du véhicule automobile selon le deuxième mode de réalisation de l'invention, respectivement lorsque la ridelle est en position fermée et ouverte ;
- La figure 14 est une vue en perspective d'un véhicule automobile selon un troisième mode de réalisation de l'invention.

### Description d'un exemple.

Sur toutes les figures, les éléments analogues sont désignés par des références identiques.

On a représenté sur la figure 4 une partie arrière d'un véhicule automobile 10 selon un premier mode de réalisation de l'invention. Le véhicule automobile comprend un toit 12 et un plancher 16 délimitant un coffre 18 avec ce toit 12. Le véhicule automobile est équipé d'un ouvrant 14 manoeuvrable autour d'un axe de pivotement A sensiblement horizontal situé au voisinage du toit 12 du véhicule automobile 10. Un tel ouvrant 14 est habituellement appelé hayon.

Le véhicule automobile comporte en outre un châssis arrière 20, comprenant des longerons arrière 22.

Un système d'absorption 24, apte à absorber des chocs du type assurance, de façon à empêcher la déformation plastique du châssis arrière 20 du véhicule en cas de choc assurance, est porté par l'ouvrant 14.

De préférence, le système d'absorption 24 est porté par l'ouvrant 14 de façon à être localisé à la hauteur d'au moins une partie de chaque longeron 22 lorsque cet ouvrant 14 est fermé, de sorte que le système d'absorption 24 est apte à transmettre des efforts aux longerons 22 en cas de choc contre ce système d'absorption 24.

On notera que, le système d'absorption 24 étant porté par l'ouvrant 14, il n'est pas agencé sur les longerons 22, ce qui permet de réduire le porte-à-faux selon une direction X longitudinale du véhicule automobile par rapport à un véhicule automobile classique, comme cela est visible par comparaison des figures 1 et 4.

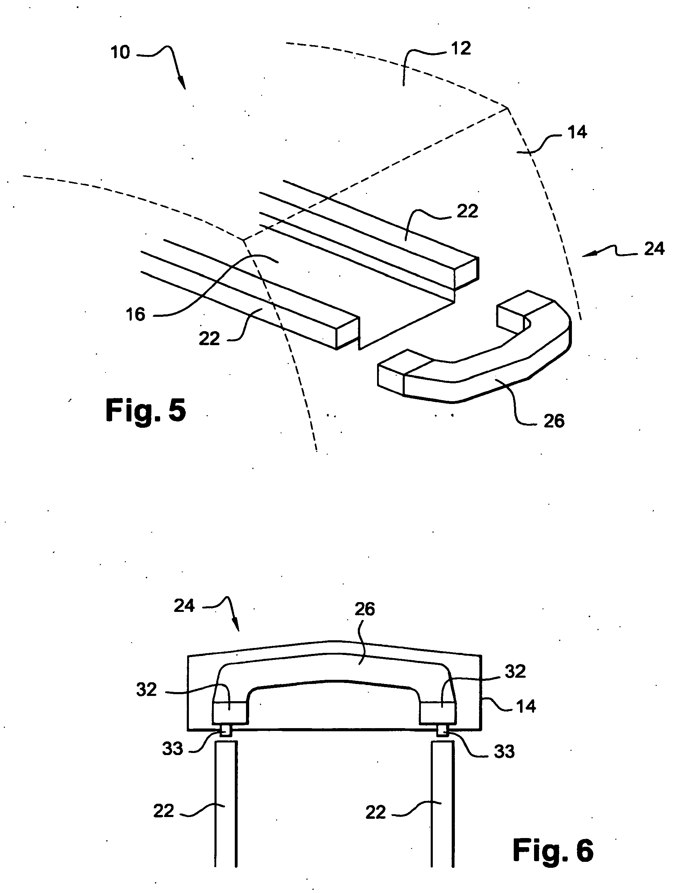

Conformément au premier mode de réalisation de l'invention, le système d'absorption 24 comporte un élément transversal 26 s'étendant transversalement sur une distance supérieure ou égale à la distance séparant les deux longerons 22, comme cela est visible sur les figures 5 et 6. Dans ce premier mode de réalisation, l'élément transversal 26 est conformé pour se déformer par flexion entre les deux longerons arrière 22 du véhicule 10 lors d'un choc assurance, absorbant ainsi l'énergie du choc. De préférence, cet élément transversal 26 est galbé vers l'extérieur du véhicule, ce qui lui permet de se déformer davantage en se dé-galbant, et ainsi absorber l'énergie d'un choc plus efficacement.

Conformément à ce mode de réalisation, le système d'absorption 24 comporte en outre deux éléments latéraux d'absorption 32, localisés chacun au droit d'un longeron 22, conformés pour se déformer par compression contre chaque longeron, associés à l'élément transversal 26, qui est agencé derrière ces éléments latéraux d'absorption 32 de façon à être en appui contre eux en cas de choc.

En cas de choc, l'élément transversal 26 n'absorbe qu'une partie minoritaire, généralement environ 20%, de l'énergie du choc, et les éléments latéraux 32 absorbent une partie majoritaire, généralement environ 80%, de l'énergie du choc.

Comme cela est visible sur la figure 6, les éléments latéraux sont munis de doigts de centrages 33 destinés à coopérer avec des orifices complémentaires ménagés dans les longerons 22 afin d'empêcher des rotations de l'élément transversal 26 lorsque celui-ci se déforme par flexion.

On notera que, dans ce cas, l'espace entre les deux longerons 22 est libre, si bien qu'il est possible d'agencer le plancher 16 au dessous des longerons, de façon à augmenter le volume du coffre 18. En effet, grâce à l'invention, le système d'absorption 24 n'encombre pas l'extrémité arrière du coffre 18 puisqu'il est porté par l'ouvrant 14, si bien que l'espace situé entre les deux longerons 22 est dégagé. L'extrémité arrière du coffre 18, située entre les deux longerons 22, peut alors être plus basse, donc plus pratique.

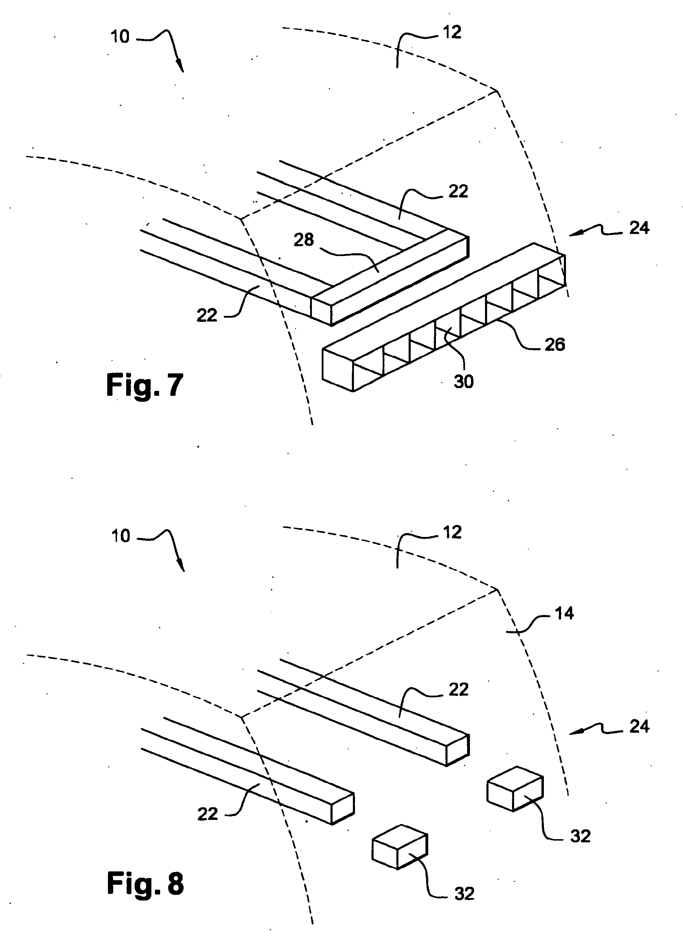

Selon une première variante représentée sur la figure 7, le châssis arrière 20 comporte une traverse rigide transversale 28, soudée à l'extrémité des longerons 22, transversalement à ces longerons 22. Conformément à cette variante de réalisation, l'élément transversal 26 est conformé pour se déformer par compression contre la traverse rigide 28 du châssis arrière 20 du véhicule 10 lors d'un choc assurance. A cet effet, l'élément transversal 26 est de préférence muni de nervures 30, par exemple agencées en nids d'abeilles, ces nervures ayant une fonction d'absorption d'énergie par compression de façon connue en soi.

Selon une deuxième variante représentée sur la figure 8, le système d'absorption 24 comporte deux éléments latéraux d'absorption 32, localisés chacun au droit d'un longeron 22, conformés pour se déformer par compression contre chaque longeron 22.

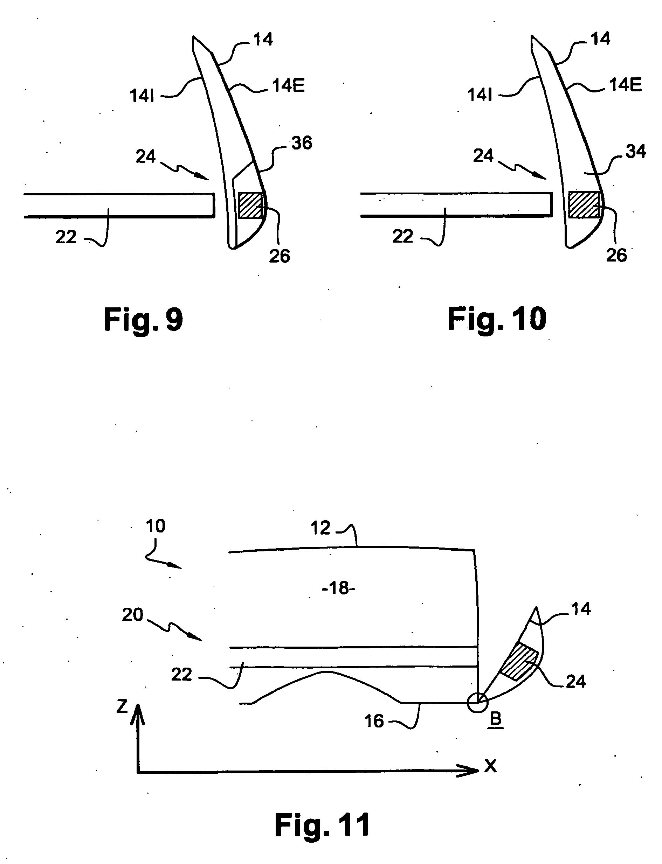

On a représenté sur la figure 9 un détail en coupe longitudinale de la partie arrière du véhicule automobile 10.

Comme cela est visible sur la figure 9, l'ouvrant 14 comprend une peau extérieure 14E et une peau intérieure 141, le système d'absorption 24 étant logé dans une pièce de carrosserie 36 formant caisson, rapportée sur la peau extérieure 14E, du côté opposé à la peau intérieure 141. De préférence, le caisson 36 est rapporté dans un renfoncement de la peau extérieure 14E, ce caisson 36 et cette peau extérieure 14E ayant alors des formes complémentaires, de sorte que l'on ne rajoute pas une forme faisant saillie de l'ensemble de la peau extérieure.

En variante représentée sur la figure 10, les peaux extérieure 14E et intérieure 14l peuvent délimiter ensemble un logement 34, dans lequel est logé au moins une partie du système d'absorption 24, par exemple l'élément transversal 26.

On notera que l'ouvrant 14 pourrait également porter d un bandeau, rapporté sur la peau extérieure 14E, apte à absorber des chocs de type parking, et pouvant également avoir une fonction décorative. Toutefois, de préférence, ces fonctions décorative et d'absorption sont assurées par la peau de l'ouvrant 14.

On a représenté sur les figure 11 à 13 une partie arrière d'un véhicule automobile 10 selon un deuxième mode de réalisation de l'invention.

Conformément à ce mode de réalisation de l'invention, l'ouvrant arrière 14 est manoeuvrable autour d'un axe de pivotement B sensiblement horizontal situé au dessous des longerons du véhicule automobile 10. Un tel ouvrant 14 est généralement appelé ridelle.

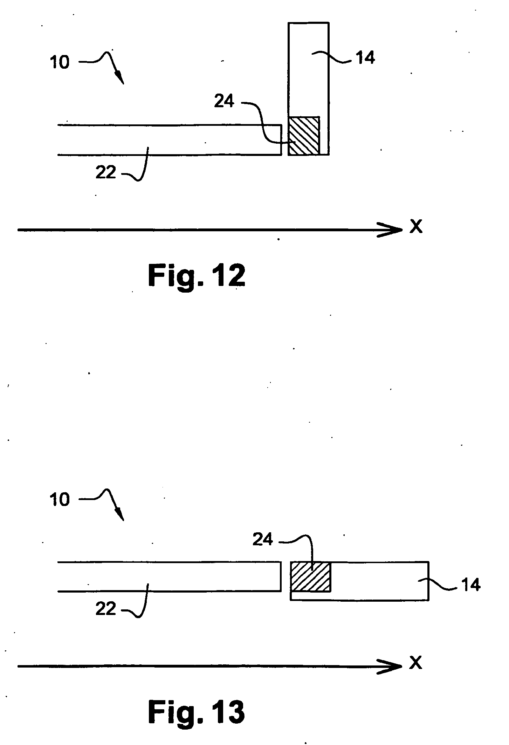

Comme cela est visible sur les figures 12 et 13, la ridelle 14 inclue la peau de pare-chocs, qui peut être constituée par la peau de la ridelle ou rapportée sur cette ridelle 14. Cette peau de pare-chocs n'est donc pas, contrairement à l'état de la technique, intercalée entre la ridelle 14 et les longerons 22 lorsque la ridelle 14 est en position ouverte. Ainsi, on réduit le porte à faux selon la direction longitudinale X du véhicule automobile.

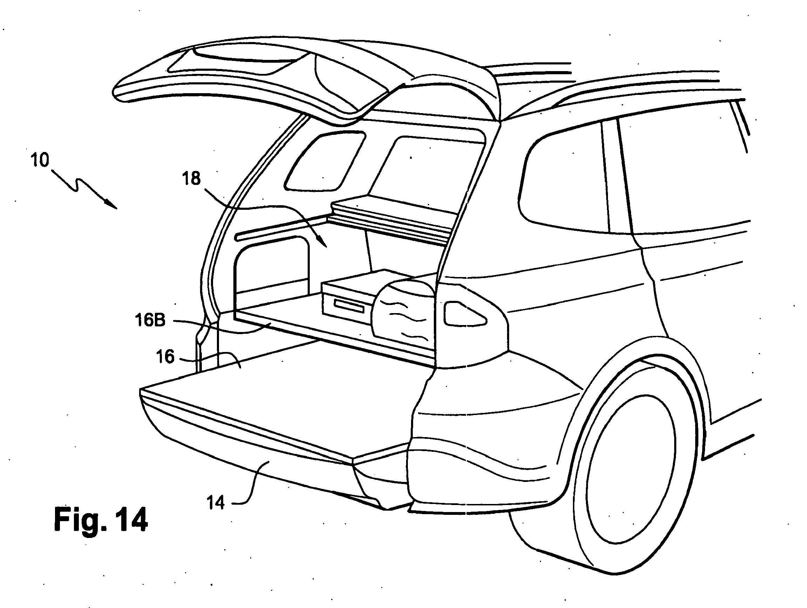

On a représenté sur la figure 14 un véhicule automobile 10 selon un troisième mode de réalisation de l'invention.

Conformément à ce troisième mode de réalisation, l'ouvrant 14 (ici une ridelle), comporte un élément transversal s'étendant transversalement sur une distance supérieure ou égale à la distance séparant les deux longerons 22, de la même manière que dans le premier mode de réalisation décrit en référence aux figures 5 et 6.

Ainsi, comme cela a été précisé précédemment, le plancher 16 peut être agencé au dessous des longerons, de façon à augmenter le volume du coffre 18. Cette caractéristique peut être optimisée en équipant le véhicule 10 avec un plancher intermédiaire 16B, divisant le coffre 18 en deux compartiments, comme cela est visible sur la figure 14.

Afin de faciliter l'accès que fond de la partie inférieure du coffre 18, le plancher inférieur 16 peut être coulissant, par exemple à l'aide de moyens de coulissement liés à la ridelle 14, aptes à coulisser lors de l'ouverture de cette ridelle 14.

On notera que ce troisième mode de réalisation peut également être mis en oeuvre sur un véhicule dont l'ouvrant 14 est un hayon, tant que cet ouvrant comprend le système d'absorption de sorte qu'il est possible d'agencer le plancher 16 au dessous des longerons.

On notera enfin que l'invention n'est pas limitée aux modes de réalisation précédemment décrits, mais englobe toute variante ne sortant pas du cadre des revendications.

En particulier, il est possible de combiner diverses caractéristiques des différents modes et variantes de réalisation sans sortir du cadre de l'invention.

## Revendications

1. Ouvrant arrière (14) destiné à équiper un véhicule automobile (10) comprenant un châssis arrière (20) et un système (24) d'absorption arrière de chocs assurance apte à absorber des chocs du type assurance afin d'empêcher la déformation plastique du châssis (20) arrière du véhicule (10),
- l'ouvrant (14) portant le système (24) d'absorption de chocs arrière du véhicule,
- l'ouvrant (14) étant destiné à équiper un véhicule automobile (10) dont le châssis arrière (20) comporte deux longerons arrière (22), le système d'absorption (24) comportant un élément transversal (26) s'étendant transversalement sur une distance supérieure ou égale à la distance séparant les deux longerons (22), **caractérisé en ce que :**
- le système d'absorption comporte deux éléments latéraux d'absorption (32), chacun étant localisé au droit de l'un des longerons (22), entre l'élément transversal (26) et l'un des longerons (22), l'élément transversal (26) étant conformé pour se déformer par flexion entre les deux longerons arrière (22) du véhicule lors d'un choc assurance,
- chaque élément latéral (32) est muni d'un doigt de centrage (33) destiné à coopérer avec un orifice complémentaire ménagé dans le longeron (22) correspondant.

2. Ouvrant arrière (14) selon la revendication 1, destiné à équiper un véhicule automobile (10) dont le châssis arrière (20) comporte des longerons (22), dans lequel le système d'absorption (24) est agencé sur l'ouvrant (14) de façon à être localisé à la hauteur d'au moins une partie de chaque longeron (22) lorsque le véhicule automobile est équipé de l'ouvrant (14) et lorsque cet ouvrant (14) est fermé, de sorte que le système d'absorption (24) est apte à transmettre des efforts aux longerons (22) en cas de choc contre ce système d'absorption (24).

3. Ouvrant arrière (14) selon la revendication 1 ou 2, destiné à équiper un véhicule automobile (10) dont le châssis arrière (20) comporte une traverse rigide transversale (28), dans lequel l'élément transversal (26) est conformé pour se déformer par compression contre la traverse rigide (28) du châssis arrière (20) du véhicule lors d'un choc assurance.

4. Ouvrant arrière (14) selon l'une quelconque des revendications 1 à 3, comprenant une peau extérieure (14E) et une peau intérieure (14I), délimitant ensemble un logement (34) pour au moins une partie du système d'absorption (24).

5. Ouvrant arrière (14) selon l'une quelconque des revendications 1 à 3, comprenant une peau extérieure (14E) et une peau intérieure (14I), le système d'absorption (24) étant logé dans une pièce de carrosserie formant caisson, rapportée sur la peau extérieure (14E), du coté opposé à la peau intérieure (14I).

6. Ouvrant arrière (14) selon l'une quelconque des revendications 1 à 5, manoeuvrable autour d'un axe de pivotement (A) sensiblement horizontal situé au voisinage du toit (12) du véhicule automobile (10), lorsque le véhicule automobile est équipé de l'ouvrant (14).

7. Ouvrant arrière (14) selon l'une quelconque des revendications 1 à 5, destiné à équiper un véhicule automobile (10) dont le châssis arrière (20) comporte deux longerons arrière (22), manoeuvrable autour d'un axe de pivotement (B) sensiblement horizontal situé au dessous du niveau des longerons (22) du véhicule automobile, lorsque le véhicule automobile est équipé de l'ouvrant (14).

8. Véhicule automobile (10), comprenant un châssis arrière (20), **caractérisé en ce qu'**il comporte un ouvrant arrière (14) selon l'une quelconque des revendications 1 à 7.

## Claims

1. A rear door (14) for fitting to a motor vehicle (10) having a rear chassis (20) and a rear insurance impact absorber system (24) suitable for absorbing insurance type impacts so as to prevent the rear chassis (20) of the vehicle (10) from deforming plastically,
- the door (14) carrying the rear impact absorber system (24) of the vehicle,
- the rear door (14) being for fitting a motor vehicle (10) with a rear chassis (20) including two rear side rails (22), the absorber system (24) comprising a transverse element (26) extending transversely over a distance greater than or equal to the distance between the two side rails (22), **characterized in that**:
- the absorber system includes two lateral absorber elements (32), each located in register with one of the side rails (22) between the transverse element (26) and one of the side rails, the transverse element (26) being shaped to deform by bending between the two rear side rails (22) of the vehicle in the event of an insurance impact,
- each lateral element (32) is provided with a centering finger (33) to co-operate with a complementary orifice formed in the corresponding side rail (22).

2. A rear door (14) according to claim 1, for fitting to a motor vehicle (10) with a rear chassis (20) that includes side rails (22), in which the absorber system (24) is arranged on the door (14) in such a manner as to be located at the same height as at least a portion of each side rail (22) when the motor vehicle is fitted with the door (14), and when said door (14) is closed, such that the absorber system (24) is suitable for transmitting forces to the side rails (22) in the event of an impact against the absorber system (24).

3. A rear door (14) according to claim 1 or 2, for fitting to a motor vehicle (10) with a rear chassis (20) including a transverse rigid cross-member (28), in which the transverse element (26) is shaped to deform by compression against the rigid cross-member (28) of the rear chassis (20) of the vehicle in the event of an insurance impact.

4. A rear door (14) according to any one of claims 1 to 3, having an outside skin (14E) and an inside skin (141) together defining a housing (34) for at least a portion of the absorber system (24).

5. A rear door (14) according to any one of claims 1 to 3, having an outside skin (14E) and an inside skin (141), the absorber system (24) being housed in a box-forming bodywork part fitted onto the outside skin (14E) on its side remote from the inside skin (141).

6. A rear door (14) according to any one of claims 1 to 5, pivotable about a substantially horizontal pivot axis (A) situated in the vicinity of the roof (12) of the motor vehicle (10) when the motor vehicle is fitted with the door (14).

7. A rear door (14) according to any one of claims 1 to 5, for fitting to a motor vehicle (10) with a rear chassis (20) including two rear side rails (22), the door being pivotable about a pivot axis (B) that is substantially horizontal and situated beneath the level of the side rails (22) of the motor vehicle, when the motor vehicle is fitted with the door (14).

8. A motor vehicle (10) including a rear chassis (20) and **characterized in that** it includes a rear door (14) according to any one of claims 1 to 7.

## Patentansprüche

1. Heckklappe (14), die dazu bestimmt ist, ein Kraftfahrzeug (10) auszustatten, das ein Heckchassis (20) und ein Versicherungs-Stoßfängertest-Heckstoßabsorptionssystem (24) aufweist, das Stöße des Typs Versicherungs-Stoßfängertest absorbieren kann, um das plastische Verformen des Heckchassis (20) des Fahrzeugs (10) zu vermeiden,
- wobei die Klappe (14) das Heckstoßabsorptionssystem (24) des Fahrzeugs trägt,
- wobei die Klappe (14) dazu bestimmt ist, ein Kraftfahrzeug (10) auszustatten, dessen Heckchassis (20) zwei Hecklängsbalken (22) aufweist, wobei das Absorptionssystem (24) ein Querelement (26) aufweist, das sich quer über eine Entfernung erstreckt, die größer oder gleich der Entfernung, die die zwei Längsbalken (22) trennt, ist, **dadurch gekennzeichnet, dass**:
- das Absorptionssystem zwei seitliche Absorptionselemente (32) aufweist, von welchen jedes iin Verlängerung zu einem der Längsbalken (22), zwischen dem Querelement (26) und einem der Längsbalken (22), positioniert ist, wobei das Querelement (26) ausgebildet ist, um sich durch Biegen zwischen den zwei Hecklängsbalken (22) des Fahrzeugs bei einem Stoß des Typs Versicherungs-Stoßfängertest zu verformen,
- jedes seitliche Element (32) mit einem Zentrierfinger (33) versehen ist, der dazu bestimmt ist, mit einer komplementären Öffnung zusammenzuwirken, die in dem entsprechenden Längsbalken (22) eingerichtet ist.

2. Heckklappe (14) nach Anspruch 1, die dazu bestimmt ist, ein Kraftfahrzeug (10) auszustatten, dessen Heckchassis (20) Längsbalken (22) aufweist, in welchem das Absorptionssystem (24) an der Klappe (14) derart eingerichtet ist, dass es sich in der Höhe von mindestens einem Teil jedes Längsbalkens (22) befindet, wenn das Kraftfahrzeug mit der Klappe (14) ausgerüstet ist, und wenn diese Klappe (14) geschlossen ist, so dass das Absorptionssystem (24) bei einem Stoß gegen dieses Absorptionssystem (24) die Kräfte auf die Längsbalken (22) übertragen kann.

3. Heckklappe (14) nach Anspruch 1 oder 2, die dazu bestimmt ist, ein Kraftfahrzeug (10) auszustatten, dessen Heckchassis (20) einen starren Querbalken (28) aufweist, wobei das Querelement (26) derart ausgebildet ist, dass es sich durch Zusammendrücken gegen den starren Querbalken (28) des Heckchassis (20) des Fahrzeugs bei einem Stoß des Typs Versicherungs-Stoßfängertest verformt.

4. Heckklappe (14) nach einem der Ansprüche 1 bis 3, die eine Außenschicht (14E) und eine Innenschicht (14I) aufweist, die gemeinsam eine Aufnahme (34) für mindestens einen Teil des Absorptionssystems (24) abgrenzen.

5. Heckklappe (14) nach einem der Ansprüche 1 bis 3, die eine Außenschicht (14E) und eine Innenschicht (14I) aufweist, wobei das Absorptionssystem (24) in einem Karosserieteil untergebracht ist, der einen Kasten bildet, der an die Außenschicht(14E) auf der der Innenschicht (14I) gegenüberliegenden Seite angebaut ist.

6. Heckklappe (14) nach einem der Ansprüche 1 bis 5, die um eine Schwenkachse (A) verlängerbar ist, die im Wesentlichen horizontal ist, die sich in der Nähe des Dachs (12) des Kraftfahrzeugs (10) befindet, wenn das Kraftfahrzeug mit der Klappe (14) ausgerüstet ist.

7. Heckklappe (14) nach einem der Ansprüche 1 bis 5, die dazu bestimmt ist, ein Kraftfahrzeug (10) auszustatten, dessen Heckchassis (20) zwei Hecklängsbalken (22) aufweist, die um eine im Wesentlichen horizontale Schwenkachse (B) verlängerbar ist, die sich unterhalb des Niveaus des Längsbalkens (22) des Kraftfahrzeugs befindet, wenn das Kraftfahrzeug mit der Heckklappe (14) ausgestattet ist.

8. Kraftfahrzeug (10), das ein Heckchassis (20) aufweist, **dadurch gekennzeichnet, dass** es eine Heckklappe (14) nach einem der Ansprüche 1 bis 7 aufweist.
